(19) Europäisches Patentamt
European Patent Office
Office européen des brevets

(11) Veröffentlichungsnummer: **0 021 271**
**B1**

(12) # EUROPÄISCHE PATENTSCHRIFT

(45) Veröffentlichungstag der Patentschrift: **13.04.83**

(51) Int. Cl.³: **C 03 C 25/02,** G 02 B 5/16

(21) Anmeldenummer: **80103291.3**

(22) Anmeldetag: **12.06.80**

(54) **Verfahren zur Herstellung eines zugfesten Lichtwellenleiters.**

(30) Priorität: **29.06.79 DE 2926415**

(43) Veröffentlichungstag der Anmeldung: **07.01.81 Patentblatt 81/1**

(45) Bekanntmachung des Hinweises auf die Patenterteilung: **13.04.83 Patentblatt 83/15**

(84) Benannte Vertragsstaaten: **AT BE DE FR GB IT NL SE**

(56) Entgegenhaltungen:
**US-A-3 533 768**
**US-A-3 920 313**
**US-A-4 099 837**

(73) Patentinhaber: **SIEMENS AKTIENGESELLSCHAFT, Berlin und München Wittelsbacherplatz 2, D-8000 München 2 (DE)**

(72) Erfinder: **Hacker, Heinz, Dr., Kaiserslauterer Strasse 9, D-8500 Nürnberg (DE)**
Erfinder: **Aulich, Hubert, Dr., Schwarzstrasse 3, D-8000 München 80 (DE)**
Erfinder: **Grabmaier, Josef, Dr., Am Seefeld 17, D-8136 Berg (DE)**
Erfinder: **Douklias, Nikolaos, Dr., Margeritenweg 17, D-8016 Heimstetten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Verfahren zur Herstellung eines zugefesten Lichtwellenleiters

Die Erfindung betrifft ein Verfahren zur Herstellung eines zugfesten Lichtwellenleiters mit einer auf der Lichtleitfaser befindlichen Kunststoffschicht auf Epoxid-Acrylat-Basis durch Aufbringen eines durch Strahlung härtbaren Prepolymeren auf die Lichtleitfaser unmittelbar nach dem Faserziehprozeß und Härtung der aufgebrachten Prepolymerschicht.

Lichtwellenleiter bestehen im wesentlichen aus Glasfasern, die ein solches Brechzahl-Profil aufweisen, daß eingestrahltes Licht allen Krümmungen folgend in ihnen geführt wird; sie können deshalb als Übertragungsmedium dienen. Der Einsatz von Glas-Lichtwellenleitern in Kommunikationssystemen, beispielsweise zur Nachrichtenübertragung, ist aber vor allem mit zwei Problemen behaftet, nämlich mit der Realisierung der der Faser eigenen hohen Festigkeit und mit der Vermeidung von Dämpfungsanstiegen, die durch Mikrobiegungen der Faser verursacht werden.

Um die genannten Probleme zu beseitigen, werden die Lichtleitfasern mit geeigneten Kunststoffen beschichtet. Als nicht reaktive Beschichtungsmaterialien werden beispielsweise folgende Polymerwerkstoffe eingesetzt: Polyvinylidenfluorid und Polymethylsiloxan (»Siemens Forsch. u. Entwickl.-Ber.«, Bd. 6, 1977, Nr. 5, S. 314 bis 319) sowie Polyester, Polyimide und Polyesterimide (DE-A-2 729 648). Reaktive Beschichtungsmaterialien sind insbesondere Epoxide und Polyurethane (»Siemens Forsch.-u. Entwickl.-Ber.«, Bd. 7, 1978, Nr. 3, S. 158 bis 165).

Bislang wird die Beschichtung mit Kunststoff, die zur Zugfestigkeitserhöhung dienen und die Glasoberfläche vor mechanischen Einflüssen und Beschädigungen schützen soll, bevorzugt in Lackiertechnik durchgeführt, wobei der Kunststoff aus einer Lösung mittels Docht oder Walze oder nach der Tauchtechnik aufgebracht wird. Die Lackiertechnik erlaubt – in technisch zufriedenstellender Weise – pro Arbeitstag jedoch nur einen Auftrag von wenigen µm, d. h. von ca. 5 µm. Da erfahrungsgemäß eine direkt auf der Lichtleitfaser aufliegende Schicht, um wirksam zu sein, im Mittel wenigstens eine Dicke von ca. 20 µm besitzen muß, sind deshalb – bei der Lackiertechnik – zur Erzielung zugfestigkeitserhöhender bzw. mechanisch wirksam schützender Schichten mehrere aufeinanderfolgende, zeitaufwendige Beschichtungsgänge notwendig.

Die Applikation aus Lösungen erfordert darüber hinaus lange Trockenstrecken bzw. hohe Trockentemperaturen zur Erzielung akzeptabler Fertigungsgeschwindigkeiten sowie – zur Vermeidung einer Umweltbelastung, d. h. aus Gründen des Umweltschutzes – aufwendige Einrichtungen zur Absaugung der Lösungsmitteldämpfe. Nachteilig sind darüber hinaus auch Lösungsmitteleinschlüsse. Ferner ist aufgrund der Oberflächenspannungsverhältnisse zwischen Beschichtungsmaterial und Substrat eine gleichmäßige Beschichtung sehr schwer zu erreichen, da der sogenannte Perlenschnureffekt nur gemildert, nicht aber verhindert werden kann, wenn das Beschichtungsmaterial im Einlauf der Trockenzone kurzzeitig niedrigviskos wird.

Das gleiche gilt für reaktive, d. h. additiv vernetzende Harzsysteme, sofern sie aus Lösungen appliziert werden; aber auch lösungsmittelfreie Systeme zeigen den Perlenschnureffekt. Erschwerend kommt bei additiv vernetzenden Systemen noch die Inkonstanz der Viskosität hinzu, bedingt durch eine ständige Weiterreaktion der Komponenten, insbesondere in der Beschichtungsvorrichtung. Eine gleichmäßige Beschichtung ist deshalb auch hierbei nicht gewährleistet.

Abgesehen davon sind für eine Fertigung die Trocknungsgeschwindigkeit und die Reaktionsgeschwindigkeit der Beschichtungsstoffe sowie die Dicke der Kunststoffschicht die geschwindigkeitsbestimmenden Faktoren. Die Trocknungszeiten lassen sich aber nur bis zu einem bestimmten Grad durch eine Temperatursteigerung in den Trockenzonen verkürzen, ohne daß die Oberflächenqualität der erzeugten Lackschicht leidet.

Kunststoffschichten können auch durch Extrusion einer festsitzenden Ummantelung direkt auf der Faseroberfläche erzeugt werden. Dieses Verfahren zieht jedoch häufig unerwünschte Zusatzdämpfungen aufgrund von Mikrobiegungen nach sich. Die Beschichtung aus heißer Schmelze bleibt letztlich auf einige wenige Materialien mit niederer Schmelzviskosität beschränkt; die Temperaturkontrolle ist dabei ebenfalls kritisch. Andere Beschichtungsverfahren, die auf der Sprühtechnik beruhen, sind wegen der Kleinheit des Substrates, d. h. der Lichtleitfaser, ungeeignet. Eine weitere, in der Fachliteratur diskutierte Möglichkeit der Beschichtung von Lichtleitfasern ist das Aufbringen pulverförmiger Mantelmaterialien auf elektrostatischem Weg. Dieses Verfahren erfordert jedoch eine elektrisch leitende bzw. leitend gemachte Faser, die darüber hinaus während des Beschichtungsvorganges kontaktiert sein muß.

Neben den Problemen der Applikation ergeben sich bei der Beschichtung von Lichtleitfasern auch Probleme bei der Verfestigung des aufgebrachten Materials, was im allgemeinen durch Verdampfung von Lösungsmitteln oder durch eine chemische Vernetzungsreaktion erfolgt. Damit ist nämlich ein erhöhter technischer und zeitlicher Aufwand verbunden, wobei insbesondere der Zeitfaktor wesentlich für ein wirtschaftliches Fertigungsverfahren ist. Daneben ergeben sich auch noch Probleme bezüglich der Haftung des Kunststoffes auf der Glasoberfläche. Eine gute Haftung des Beschichtungsmaterials ist aber erforderlich, um hohe Zugfestigkeiten zu erreichen. Deshalb werden zu diesem Zweck Haftvermittler eingesetzt. Beim direkten Auftrag eines Haftvermittlers auf die Faseroberfläche, der im allgemeinen die wirksamste Form der Applikation darstellt, ist aber ein

zusätzlicher Arbeitsgang erforderlich. Außerdem ist bei einem derartigen Vorgehen eine mechanische Verletzung der jungfräulichen Glasoberfläche, insbesondere durch die Beschichtungsküvette, nicht auszuschließen.

Aus US-A-4 099 837 ist ein Lichtwellenleiter bekannt, auf dessen Glasfaser — zur Erhöhung der Zugfestigkeit — ein Polymerüberzug aus dem Polymerisierungsprodukt eines Prepolymergemisches aufgebracht ist, das durch Umsetzung von Acrylsäure mit einem Gemisch eines aliphatischen und eines aromatischen Diglycidyläthers im Gewichtsverhältnis von 0,4 : 1,0 erhalten wird; das Gemisch enthält einen UV-Sensibilisator zur Härtung des Prepolymeren mit ultraviolettem Licht. Darüber hinaus weist das Beschichtungsmaterial bevorzugt noch einen Haftvermittler auf Silan- oder Titanatbasis auf. Neben dem Erfordernis eines Haftvermittlers macht sich beim bekannten Lichtwellenleiter insbesondere auch die Tatsache nachteilig bemerkbar, daß die Kunststoffschicht auf Epoxid-Acrylat-Basis freie Epoxidgruppen enthält, d. h. reaktive Gruppen, was nicht nur eine Klebrigkeit verursachen kann, sondern insbesondere auch in toxischer Hinsicht bedenklich ist.

Aufgabe der Erfindung ist es, ein Verfahren der eingangs genannten Art — zur Herstellung eines Lichtwellenleiters unter Verwendung eines Prepolymeren zur Beschichtung — derart auszugestalten, daß eine rationelle Fertigung ermöglicht und eine Gefährdung der Umwelt ausgeschlossen wird. Insbesondere soll ein Lichtwellenleiter hergestellt werden, der eine hohe Zugfestigkeit aufweist, ohne daß die Verwendung eines Haftvermittlers erforderlich ist. Darüber hinaus soll die Kunststoffschicht in einem einzigen Arbeitsgang aufgebracht und rasch gehärtet werden können.

Dies wird erfindungsgemäß dadurch erreicht, daß als Prepolymeres ein durch aktinische Strahlung härtbares Addukt aus wenigstens einem acylierten Hydroxyester der Acryl- und/oder Methacrylsäure und einem Epoxid mit $n \leq 3$ Epoxidgruppen pro Molekül verwendet wird, wobei das Addukt der allgemeinen Formel I

$$R_1 \left[ -O-CH_2-\underset{\displaystyle OH}{\underset{|}{CH}}-CH_2-OOC-R_2-COO-R_3-OOC-\underset{\displaystyle R_4}{\underset{|}{C}}=CH_2 \right]_n \qquad (I)$$

entspricht, in der

- $R_1$ den Kern eines Epoxids mit n Epoxidgruppen,
- $R_2$ den Kern einer aliphatischen, cycloaliphatischen oder aromatischen Dicarbonsäure,
- $R_3$ einen aliphatischen oder cycloaliphatischen Rest mit 2 bis 12 C-Atomen und
- $R_4$ ein Wasserstoffatom oder eine Methylgruppe bedeutet und
- n eine ganze Zahl zwischen 1 und 3 ist.

Unter »Kern« eines Epoxids wird dabei eine organische Struktur verstanden, die wenigstens einen Rest

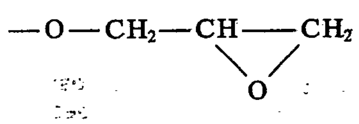

trägt oder wenigstens eine Epoxidfunktion in Form einer Cyclohexenoxid-Gruppierung aufweist. Der »Kern« einer Dicarbonsäure ist im Rahmen der vorliegenden Patentanmeldung eine aliphatische, cycloaliphatische oder aromatische Struktur, die zwei Carboxylgruppen (—COOH) trägt; ein aliphatischer Kern $R_2$ kann dabei gesättigt oder ungesättigt und verzweigt oder unverzweigt sein, ein cycloaliphatischer Kern gesättigt oder ungesättigt. Der Rest $R_3$ kann ebenfalls gesättigter oder ungesättigter cycloaliphatischer bzw. gesättigter oder ungesättigter, verzweigter oder unverzweigter aliphatischer Natur sein.

Der Aufbau der beim erfindungsgemäßen Verfahren eingesetzten Prepolymeren erfolgt beispielsweise folgendermaßen:

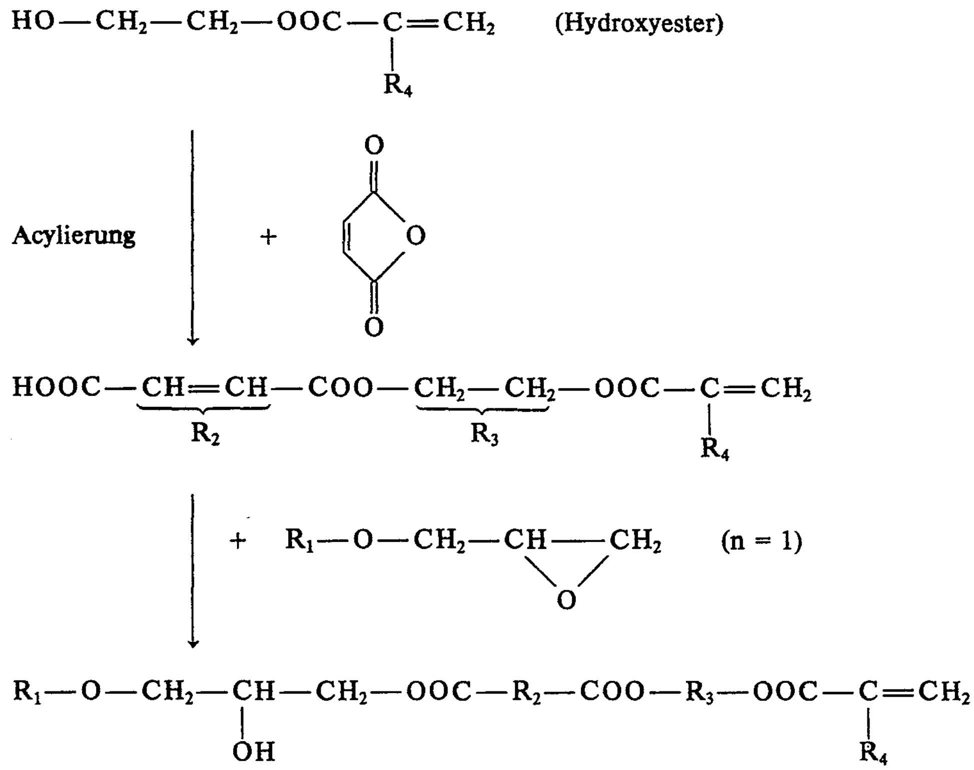


Der nach dem erfindungsgemäßen Verfahren hergestellte Lichtwellenleiter weist folgende Vorteile auf:

- Die Beschichtung kann in einem einzigen Arbeitsgang — als sogenannter Dickschichtauftrag — auf die Lichtleitfaser aufgebracht werden (20 bis 50 μm pro Arbeitsgang).
- Die Beschichtung reagiert bei Raumtemperaturen chemisch nicht weiter, d. h. sie ist viskositätskonstant.
- Das Beschichtungsmaterial kann rasch gehärtet werden, so daß sich hohe Fertigungsgeschwindigkeiten ergeben.
- Die Kunststoffschicht haftet — ohne Haftvermittler — fest an der Oberfläche der Lichtleitfaser aus Glas.
- Die Zugfestigkeit ist im Vergleich zu bekannten Lichtwellenleitern erhöht.
- Der Lichtwellenleiter kann beispielsweise bei nachfolgenden Extrusionsprozessen kurzzeitig Temperaturen über 250° C ausgesetzt werden.

Die genannten Vorteile ergeben sich aufgrund folgender Tatsachen:

- Unmittelbar im Anschluß an den Faserziehprozeß wird die Lichtleitfaser, beispielsweise mit Hilfe einer Beschichtungsküvette, mit dem Prepolymeren beschichtet, und zwar in lösungsmittelfreier Form.
- Die physikalischen, mechanischen und thermischen Eigenschaften der Prepolymeren können — über einen gezielten chemischen Aufbau — in weiten Grenzen variiert werden. Im einzelnen sind beeinflußbar:

  a) die Viskosität der Prepolymeren, die für die pro Arbeitsgang erzielbare Schichtdicke bestimmend ist; sie läßt sich — außer durch die Temperatur — durch die Auswahl der chemischen Bausteine der Prepolymeren beeinflussen;
  b) die mechanischen Eigenschaften des Beschichtungsmaterials lassen sich ebenfalls über die chemischen Bausteine, aus denen die Prepolymeren aufgebaut sind, einstellen; dabei kann auch der störende Einfluß radialer Druckkräfte auf die Dämpfung des Lichtwellenleiters unterbunden werden;
  c) die Zahl der polaren Gruppen (in Form von Ester- und Hydroxylgruppen) pro Polymereinheit, die für die Haftung der Beschichtung auf der Glasoberfläche maßgebend sind (die Haftung beruht auf starken physikalischen Wechselwirkungen); und

d) die Art und Anzahl der durch aktinische Strahlung äußerst rasch vernetzbaren chemischen Gruppierungen, die den Vernetzungsgrad und damit die mechanischen und thermischen Eigenschaften und die Oberflächenqualität des Beschichtungsmaterials sowie die gleichmäßige Stärke der Beschichtung (Verhinderung des Auftretens des Perlenschnureffektes) bestimmen.

Aufgrund der Variationsbreite der beim erfindungsgemäßen Verfahren eingesetzten Prepolymeren ist es auch möglich, auf die Kunststoffschicht gut haftende Beschichtungen aus derartigen Prepolymeren als sogenannte Polster- oder Pufferschicht aufzubringen. Hierzu verwendet man Prepolymere mit niedrigerem E-Modul, die eine weiche Pufferschicht ergeben, welche — aufgrund des chemisch ähnlichen Aufbaus — gut auf der mechanisch festen Kunststoffschicht haftet. Auf die Pufferschicht kann dann, falls erforderlich, auch noch ein thermoplastisches Schutzrohr aufgebracht werden, beispielsweise nach dem Schlauchreckverfahren.

Die Härtung bzw. Vernetzung der Prepolymeren erfolgt beim erfindungsgemäßen Verfahren mittels aktinischer Strahlung, d. h. photochemisch wirksamer Strahlung; vorzugsweise wird UV-Strahlung verwendet. Dabei ist von Bedeutung, daß die UV-Härtung bereits bei niederen Temperaturen erfolgt. Die Sensibilisierung für eine durch UV-Licht initiierte Vernetzung erfolgt beim erfindungsgemäßen Verfahren im allgemeinen durch Zugabe von ca. 1 Gew.-% eines Sensibilisators, beispielsweise Benzoinisopropyläther.

Beim erfindungsgemäßen Verfahren können den Prepolymeren vorteilhaft 1 : 1-Addukte aus Acryl- und/oder Methacrylsäure und Acryl- und/oder Methacrylsäureglycidylester zugesetzt werden. Über derartige Addukte, die quasi reaktive Verdünner darstellen, kann ebenfalls die Viskosität der Prepolymeren eingestellt werden. Die verwendeten Prepolymeren selbst sind im allgemeinen bei Raumtemperaturen nieder- bis mittelviskos (Viskosität: 10 bis 300 000 cP bzw. mPa · s). Aufgrund des allgemeinen Aufbauschemas besteht jedoch auch die Möglichkeit, beim erfindungsgemäßen Verfahren bei Raumtemperatur feste Prepolymere einzusetzen. Derartige Prepolymere besitzen den Vorteil, daß sie eine niedrige Schmelzviskosität besitzen und deshalb für eine Extrusionsbeschichtung geeignet sind.

Allgemein sei noch darauf hingewiesen, daß beim erfindungsgemäßen Verfahren die Einstellung einer für eine Küvettenbeschichtung optimalen Viskosität möglich ist (Vermeidung des Perlenschnureffektes). Darüber hinaus können bei diesem Verfahren — durch einfache Temperatursteuerung in der Beschichtungsvorrichtung — Beschichtungen mit geringen Dickenschwankungen erzeugt werden.

Das Merkmal des möglichen festen Aggregatzustandes unterscheidet die beim erfindungsgemäßen Verfahren eingesetzten Prepolymeren von den aus US-A-4 099 837 bekannten Prepolymeren. Darüber hinaus weisen diese Prepolymeren auch keine freien Epoxidgruppen auf. Von Vorteil ist beim erfindungsgemäßen Verfahren ferner, daß grundsätzlich kein Haftvermittler erforderlich ist und daß die Möglichkeit der Einstellung einer optimalen Viskosität besteht.

Anhand von Beispielen soll die Erfindung noch näher erläutert werden.

1. Herstellung eines viskosen Prepolymeren

   Zu 650,4 Gewichtsteilen 2-Hydroxyäthylmethacrylat werden 490,3 Gewichtsteile Maleinsäureanhydrid, 5,7 Gewichtsteile 4.4'-N.N'-Dimethylamino-diphenylmethan (T-Base) und 0,2 Gewichtsteile Hydrochinon gegeben. Nach 12tägigem Rühren bei Raumtemperatur (22° C) erhält man eine schwach grünliche Flüssigkeit (Säurezahl: 251).

   503,1 Gewichtsteile des acylierten 2-Hydroxyäthylmethacrylsäureesters werden bei einer Temperatur von 60 bis 65° C unter ständigem Rühren innerhalb einer Stunde in 391,5 Gewichtsteile Bisphenol-A-bisglycidyläther (Epoxidzahl: 0,559) eingetragen. Die Reaktion wird durch Zugabe von 1 Gewichtsteil T-Base katalysiert. Nach einer Reaktionszeit von 80 bis 100 Stunden wird ein schwach gelblich gefärbtes, honigartiges Prepolymeres mit einer Viskosität ($\eta_{20}$) von 230 000 cP erhalten.

2. Herstellung eines festen Prepolymeren

   297 Gewichtsteile Triglycidylisocyanurat (Epoxidzahl: 1,01) werden unter Rühren bei 130° C aufgeschmolzen und mit 1,5 Gewichtsteilen 4.4'-Methylen-bis-(N.N-dimethylanilin) und 0,2 Gewichtsteilen Hydrochinon versetzt. Nach Abkühlen der Schmelze auf 110° C werden unter fortwährendem Rühren innerhalb einer Stunde 684 Gewichtsteile des — nach 1) hergestellten — acylierten 2-Hydroxyäthylmethacrylsäureesters (Säurezahl: 251) zugetropft. Während dieser Zeit wird die Reaktionstemperatur auf 80 bis 85° C abgesenkt und auf dieser Temperatur für ca. 3 Stunden gehalten. Dabei wird ein bei Raumtemperatur festes Harz mit einer Restsäurezahl von ca. 4 und einer Restepoxidzahl von 0,006 erhalten, das sich zur Beschichtung aus der Schmelze eignet.

Abschließend sei noch darauf hingewiesen, daß beim erfindungsgemäßen Verfahren die Vernetzung — anstatt mit aktinischer Strahlung — auch durch radikalische Initiierung erfolgen kann. Allerdings ist dann kein Dickschichtauftrag möglich. Die nach dem erfindungsgemäßen Verfahren hergestellten Lichtwellenleiter eignen sich insbesondere für Zwecke der optischen Nachrichtenübertragung.

**Patentansprüche**

1. Verfahren zur Herstellung eines zugfesten Lichtwellenleiters mit einer auf der Lichtleitfaser befindlichen Kunststoffschicht auf Epoxid-Acrylat-Basis durch Aufbringen eines durch Strahlung härtbaren Prepolymeren auf die Lichtleitfaser unmittelbar nach dem Faserziehprozeß und Härtung der aufgebrachten Prepolymerschicht, dadurch gekennzeichnet, daß als Prepolymeres ein durch aktinische Strahlung härtbares Addukt aus wenigstens einem acylierten Hydroxyester der Acryl- und/oder Methacrylsäure und einem Epoxid mit $n \leq 3$ Epoxidgruppen pro Molekül verwendet wird, wobei das Addukt der allgemeinen Formel I

$$R_1 \!-\!\!\left[ -O-CH_2-\underset{\displaystyle OH}{\underset{|}{CH}}-CH_2-OOC-R_2-COO-R_3-OOC-\underset{\displaystyle R_4}{\underset{|}{C}}=CH_2 \right]_n \qquad (I)$$

entspricht, in der

$R_1$ den Kern eines Epoxids mit n Epoxidgruppen,
$R_2$ den Kern einer aliphatischen, cycloaliphatischen oder aromatischen Dicarbonsäure,
$R_3$ einen aliphatischen oder cycloaliphatischen Rest mit 2 bis 12 C-Atomen und
$R_4$ ein Wasserstoffatom oder eine Methylgruppe bedeutet und
n eine ganze Zahl zwischen 1 und 3 ist.

2. Verfahren nach Anspruch 1, dadurch gekennzeichnet, daß das Addukt I durch UV-Strahlung gehärtet wird.

3. Verfahren nach Anspruch 1 oder 2, dadurch gekennzeichnet, daß das Addukt I mit wenigstens einem 1 : 1-Addukt aus Acryl- und/oder Methacrylsäure und Acryl- und/oder Methacrylsäureglycidylester versetzt wird.

**Claims**

1. A process for the production of a tension-resistant light waveguide having an epoxide-acrylic based synthetic resin layer arranged on the light-conducting fibre, by applying a prepolymer, which can be hardened by irradiation, to the light-conducting fibre immediately after the fibre-drawing process, and hardening the applied prepolymer layer, characterised in that an addition product is used which can be hardened by actinic radiation and which consists of at least one acylated hydroxyester of acrylic and/or methacrylic acid and an epoxide having $n \leq 3$ epoxy groups per molecule, the addition product corresponding to the general formula I:

$$R_1 \!-\!\!\left[ -O-CH_2-\underset{\displaystyle OH}{\underset{|}{CH}}-CH_2-OOC-R_2-COO-R_3-OOC-\underset{\displaystyle R_4}{\underset{|}{C}}=CH_2 \right]_n \qquad (I)$$

where

$R_1$ represents the residue of an epoxide having n epoxy groups,
$R_2$ represents central residue of an aliphatic, cycloaliphatic or aromatic dicarboxylic acid,
$R_3$ represents an aliphatic or cycloaliphatic residue having 2 to 12 atoms, and
$R_4$ represents a hydrogen atom or a methyl group, and n is an integer in the range of 1 to 3.

2. A process according to Claim 1, characterised in that the addition produckt I is hardened by UV-radiation.

3. A process according to Claim 1 or Claim 2, characterised in that the addition product I is mixed with at least one 1 : 1-addition product of acrylic acid and/or methacrylic acid and acrylic acid glycidyl ester and/or methacrylic acid glycidyl ester.

**Revendications**

1. Procédé de fabrication d'une fibre optique résistant à la traction, ayant une couche de matière plastique à base d'époxyde-acrylate se trouvant sur la fibre optique, par dépôt sur la fibre optique, immédiatement après le processus d'étirage de la fibre, d'un prépolymère pouvant durcir par rayonnement et par durcissement de la couche de prépolymère déposée, caractérisé en ce qu'il consiste à utiliser comme prépolymère un produit d'addition pouvant durcir sous l'effet d'un rayonnement actinique, constitué d'au moins hydroxyester acylé de l'acide acrylique et/ou de l'acide méthacrylique, et un époxyde ayant $n \leq 3$ groupes époxy par molécule, le produit d'addition répondant à la formule développée I

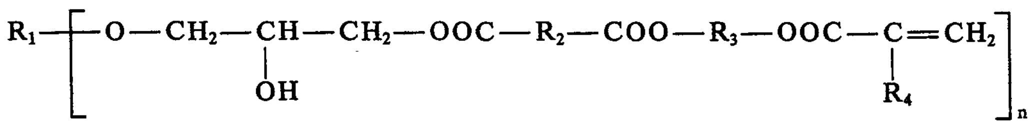

(I)

dans laquelle:

$R_1$ est le noyau d'un époxyde ayant n groupes époxyde,
$R_2$ est le noyau d'un acide dicarboxylique aliphatique, cycloaliphatique ou aromatique,
$R_3$ est un radical aliphatique ou cycloaliphatique ayant de 2 à 12 atomes de carbone, et
$R_4$ est un atome d'hydrogène ou un groupe méthyle et
n est un nombre entier compris entre 1 et 3.

2. Procédé suivant la revendication 1, caractérisé en ce qu'il consiste à durcir le produit d'addition (I) par un rayonnement UV.

3. Procédé suivant la revendication 1 ou 2, caractérisé en ce qu'il consiste à mélanger le produit d'addition (I) à au moins un produit d'addition (1 : 1) d'acide acrylique et/ou méthacrylique et d'ester glycicylique de l'acide acrylique et/ou de l'acide méthacrylique.